# EUROPÄISCHE PATENTSCHRIFT

(11) **EP 2 559 130 B1**
(45) Veröffentlichungstag und Bekanntmachung des Hinweises auf die Patenterteilung: **14.12.2016**
(21) Anmeldenummer: 11716210.7
(22) Anmeldetag: 15.04.2011
(51) Int. Cl.: H02J 3/38

(54) **VERFAHREN ZUR STROMEINSPEISUNG UND STROMEINSPEISESYSTEM**
METHOD FOR INPUTTING CURRENT AND CURRENT INPUT SYSTEM
PROCÉDÉ POUR INJECTER DU COURANT ET SYSTÈME D'INJECTION DE COURANT

(30) Priorität: 16.04.2010 DE 102010015440
(43) Veröffentlichungstag der Anmeldung: 20.02.2013
(73) Patentinhaber: Kenersys India Pvt. Ltd., Pune 411001 MAH (IN)
(72) Erfinder: BÜCKER, Andreas, 49205 Hasbergen (DE)
(74) Vertreter: Michalski Hüttermann & Partner Patentanwälte mbB
(86) Internationale Anmeldenummer: PCT/EP2011/056015
(87) Internationale Veröffentlichungsnummer: WO 2011/128438

(56) Entgegenhaltungen:
- EP-A1- 0 208 088
- EP-A1- 0 471 106
- DE-A1- 10 019 362

## Beschreibung

Die Erfindung betrifft ein Verfahren zur Einspeisung von Strom in ein mehrphasiges Wechselspannungsnetz über einen Transformator, der zwischen dem Wechselspannungsnetz und einer der Anzahl der Netz-Phasen des Netzes entsprechenden Zahl von Einspeise-Phasen elektrisch zwischengeschaltet ist, wobei mindestens eine Spannungskenngröße einer der Netz-Phasen ermittelt wird und eine Einspeisung von Blindströmen in Abhängigkeit einer zuvor bestimmten Abweichung der Spannungskenngröße der mindestens einen Netz-Phase gegenüber einer entsprechenden Soll-Spannungskenngröße erfolgt.

Die Erfindung betrifft weiterhin ein entsprechendes System zum Einspeisen von Strom in ein mehrphasiges Wechselspannungsnetz.

Ein derartiges Verfahren und ein derartiges System sind zum Beispiel für die Stromeinspeisung bei einer Windenergieanlage (WEA) bekannt, die normalerweise netzparallel betrieben wird. Tritt ein Fehler - also eine Abweichung der Spannungskenngröße mindestens einer der Phasen gegenüber einer entsprechenden Soll- Spannungskenngröße - im Wechselspannungsnetz auf, soll die Windenergieanlage das Netz bezüglich seines Spannungsverlaufs stützen. Ein derartiges Stützen des Netzes bei einem mehrphasigen Wechselspannungsnetz erfolgt derzeit als symmetrische Blindstromeinspeisung. Die deutsche Verordnung zu Systemdienstleistungen durch Windenergieanlagen (SDLWindV) sieht dazu bei dreiphasigen Wechselspannungsnetzen vor, dass bei Auftreten einer signifikanten Spannungsabweichung auf zumindest einer der Phasen die als Windenergie-Erzeugungseinheit der Windenergieanlage ausgebildete Energieerzeugungseinrichtung die Spannung im Wechselspannungsnetz durch Anpassung (Erhöhung oder Absenkung) des Blindstroms stützen muß. Bei ein- oder zweipoligen Abweichungen (Fehlern), also bezüglich der Phasen des Netzes asymmetrischen Fehlern, müssen die Windenergie-Erzeugungseinheiten laut dieser Verordnung technisch in der Lage sein, einen Blindstrom von mindestens 40 Prozent des Nennstroms einzuspeisen. Die Einspeisung des Blindstroms darf die Anforderungen an das Durchfahren von Netzfehlern nicht gefährden.

Das Wechselspannungsnetz ist zumeist ein Mittelspannungs- oder Hochspannungsnetz (MS-oder HS-Netz). Der entsprechende Netzfehler tritt in diesem Netz auf und wird über den Transformator in ein der Energieerzeugungseinrichtung zugeordnetes Niederspannungsnetz (NS-Netz) transformiert. Unabhängig von der Schaltung des Transformators, also ob es sich um eine Dreieck-Stern- (Dy-Schaltung) oder Stern-Stern-Schaltung (Yy-Schaltung) handelt, wird der Fehler symmetrisch in allen drei erzeugerseitigen Phasen übertragen. Die Windenergie-Erzeugungseinheiten der Windenergieanlagen speisen daher einen symmetrischen dreipoligen Blindstrom ins Netz ein, der in der Regel einstellbar regelbar ist.

Es ergeben sich dabei folgende Schwierigkeiten, die am Beispiel eines dreiphasigen Systems verdeutlicht werden sollen. Bei Netzfehlern auf einer oder zwei Phasen, also bei Fehlern, die nicht in allen drei Phasen des dreiphasigen Netzes auftreten, wird das dreiphasige Spannungssystem (Drehstromsystem) stark verzerrt. Beispielsweise werden bei einem zweipoligen Fehler eines Systems ohne Erdkontakt auf Seiten des Netzes, zwei Phasen in der Spannung deutlich abgesenkt, die dritte Phase bleibt nahezu unverändert. Bei Verwendung eines Dy Transformators ergeben sich auf Seiten der Energieerzeugungseinheit, also der Niederspannungsseite (NS-Seite) leichte Absenkungen zweier Generator-Phasen und eine sehr starke Absenkung einer dritten Phase. Speist man nun einen dreiphasigen Blindstrom (übererregt) als Netzstützung ein, so werden die je einer Phase zugeordneten drei Spannungen auf Seiten der Energieerzeugungseinheit (NS-Seite) gleichmäßig angehoben, was eventuell dazu führen kann, dass die beiden nicht stark abgesenkten Phasen wegen Überspannung abgeschaltet werden (Überspannungsabschaltung) und die dritte stark abgesenkte Phase weniger stark angehoben wird.
Bei Verwendung eines Yy-Transformators ergibt sich bei entsprechendem Fehler eine entsprechende Situation. Wird auch hier ein dreiphasiger Blindstrom als Netzstützung eingespeist, hebt/heben sich die "gesunde(n)" Phase(n) stark an und es kann zu einer Spannungsabschaltung kommen.

Die EP 0 208 088 A1 beschreibt ein Verfahren zur Einspeisung von Strom in ein mehrphasiges Wechselspannungsnetz, bei dem auch die Abweichung jeder der Spannungskenngrößen der Netzphasen bestimmt wird und die Einspeisung von Blindströmen bei Abweichungen, die bezüglich der Symmetrie der Soll-Spannungskenngrößen asymmetrisch ausgebildet sind, eine bezüglich der jeweiligen Einspeisung an den Einspeise-Phasen asymmetrische Einspeisung der Blindströmen ist.

Es ist die Aufgabe der Erfindung ein Verfahren und ein System zur Stromeinspeisung zu schaffen, die einfach zu realisieren sind und bei denen die stützenden Eigenschaften verbessert werden.

Die Lösung der Aufgabe erfolgt erfindungsgemäß durch die Merkmale der unabhängigen Ansprüche, vorteilhafte Ausgestaltungen der Erfindung sind in den Unteransprüchen angegeben.

Die oben genannte Aufgabe wird bei dem erfindungsgemäßen Verfahren dadurch gelöst, dass die Abweichung jeder der Spannungskenngrößen bestimmt wird und die Einspeisung der Blindströmen bei Abweichungen, die bezüglich der Symmetrie der Soll-Spannungskenngrößen asymmetrisch ausgebildet sind, eine bezüglich der jeweiligen Einspeisung an den Einspeise-Phasen asymmetrische Einspeisung der Blindströme ist. Die Abweichung kann dabei in der Phasenbeziehung des der Spannungskenngröße zugrundeliegenden Spannungsverlaufs zum Soll-Spannungsverlauf oder in dem Amplitudenverhältnis des der Spannungskenngröße zugrundeliegenden Spannungsverlaufs zum Soll-Spannungsverlauf begründet sein. Im Allgemeinen weist die Amplitude der Effektivspannung für alle Phasen des Netzes den gleichen Betrag auf. Die Abweichung ist daher insbesondere eine Abweichung der resultierenden Effektivspannung von der Soll-Effektivspannung.

Das mehrphasige Wechselspannungsnetz ist bevorzugt ein dreiphasiges Wechselspannungsnetz (Drehstromnetz). Dabei ist der Transformator zum Beispiel ein Stern-Stern-Transformator (yy-Transformator) oder ein Dreieck-Stern-Transformator (Dy-Transformator). Dabei kann der Nullpunkt der zumindest einen Stern-Schaltung herausgeführt sein oder nicht herausgeführt sein.

Insbesondere ist vorgesehen, dass die asymmetrische Einspeisung der Blindströme nur bei einer Abweichung erfolgt, die einen Toleranzwert (eine Toleranzschwelle) Δ überschreitet. Eine Abweichung der mindestens einen Spannungskenngröße von der ihr zugeordneten Soll-Spannungskenngröße der entsprechenden Netz-Phase, die über den Toleranzwert hinausgeht, zeigt einen sogenannten Netzfehler an. Der Toleranzwert ist somit eine Fehlertoleranz und die asymmetrische Einspeisung der Blindströme erfolgt bei erkennen eines durch die Fehlertoleranz bestimmten Netzfehlers.

Gemäß einer bevorzugten ersten alternativen Ausführungsform der Erfindung ist vorgesehen, dass die Ermittlung der Spannungskenngrößen ein Messen der an den Netz-Phasen anliegenden Spannungen und ein Bestimmen der Spannungskenngrößen aus der jeweiligen Spannung ist. Die Messung erfolgt im Bereich des Transformators. Ist der Transformator beispielsweise ein Transformator mit herausgeführtem Nullpunkt, so werden die Spannungen jeder der Phasen (beziehungsweise Pole) des Netzes bevorzugt bezüglich dieses Nullpunkts (als Referenzpotential) gemessen.

Gemäß einer bevorzugten zweiten alternativen Ausführungsfοrm der Erfindung ist vorgesehen, dass die Ermittlung der Spannungskenngröße ein Messen von entsprechenden Spannungswerten an den Einspeise-Phasen und eine Bestimmung der zugehörigen Spannungskenngröße aus den Spannungswerten mittels eines Modells des Transformators ist. Das Modell ist bevorzugt ein mathematisches Modell. Eine derartige Ermittlung der Spannungskenngröße wird zum Beispiel bei Verwendung eines Transformators ohne herausgeführten Nullpunkt bevorzugt.

Insbesondere ist vorgesehen, dass sich die Soll-Spannungskenngröße zu einem beliebigen Zeitpunkt aus den bisher ermittelten Spannungskenngrößen ergibt. Die Soll-Spannungskenngröße kann alternativ oder zusätzlich auch auf anderem Wege vorgegeben sein.

Gemäß einer weiteren bevorzugten Ausführungsform der Erfindung ist vorgesehen, dass die Einspeisung der Blindströme mittels einer einspeiseseitig an den Transformator angeschlossenen Energieerzeugungseinrichtung mit Generator und nachgeschaltetem Umrichtersystem erfolgt, wobei nach Erkennen einer über den Toleranzwert hinausgehenden Abweichung ein Erregerstrom des Generators reduziert wird und mittels des Umrichtersystems der asymmetrische Blindstrom eingespeist wird.

Die Erfindung betrifft weiterhin ein System zum Einspeisen von Strom in ein mehrphasiges Wechselspannungsnetz, mit einer Energieerzeugungseinrichtung, die einen Generator und ein dem Generator nachgeschaltetes Umrichtersystem aufweist, mit einem Transformator, der zwischen dem Wechselspannungsnetz und einer der Anzahl der Netz-Phasen entsprechenden Zahl von Ausgängen des Umrichtersystems zwischengeschaltet ist, und mit einer Vorrichtung zur Ermittlung mindestens einer Spannungskenngröße einer der Netz-Phasen und einer Einrichtung zur Bestimmung einer Abweichung mindestens einer ermittelten Spannungskenngrößen gegenüber einer entsprechenden Soll-Spannungkenngröße und zur Steuerung des Umrichtersystems derart, dass eine Einspeisung von Blindstrom in Abhängigkeit der zuvor bestimmten Abweichung erfolgt, wobei die Einrichtung eine Einrichtung zur Bestimmung der Abweichung jeder der Spannungskenngrößen ist und den Umrichter derart ansteuert, dass dieser bei Abweichungen, die bezüglich der Symmetrie der Soll-Spannungsverläufe asymmetrisch ausgebildet sind, einen bezüglich der Ausgänge asymmetrischen Blindstrom einspeist. Das System ist insbesondere ein System einer Windenergieanlage (WEA).

Gemäß einer bevorzugten Ausführungsform der Erfindung ist vorgesehen, dass das Umrichtersystem einen generatorseitigen Umrichter, einen Gleichspannungszwischenkreis und einen netzseitigen Umrichter mit den Ausgängen aufweist. Derartige Umrichtersysteme sind aus Windenergieanlagen bekannt.

Gemäß einer weiteren bevorzugten Ausführungsform der Erfindung ist vorgesehen, dass das System eine Vorrichtung zur Messung der an den Netz-Phasen anliegenden Spannungen aufweist Alternativ dazu ist vorgesehen, dass das System eine Vorrichtung zur Messung der an den Ausgängen anliegenden Spannungswerten und ein Modell des Transformators zur Bestimmung der zugehörigen Spannungskenngröße aus den Spannungswerten aufweist. Das Modell ist bevorzugt ein mathematisches Modell, das in der Einrichtung zur Bestimmung der Abweichung jeder der Spannungskenngrößen implementiert ist.

Es zeigen:
Fig. 1 ein Stromeinspeisesystem gemäß einer bevorzugten Ausführungsform der Erfindung, und
Fig. 2a - 2d Diagramme, bei denen netzseitige sowie erzeugerseitige Effektivspannungen Ueffund Effektivströme Ieff über der Zeit t aufgetragen sind.

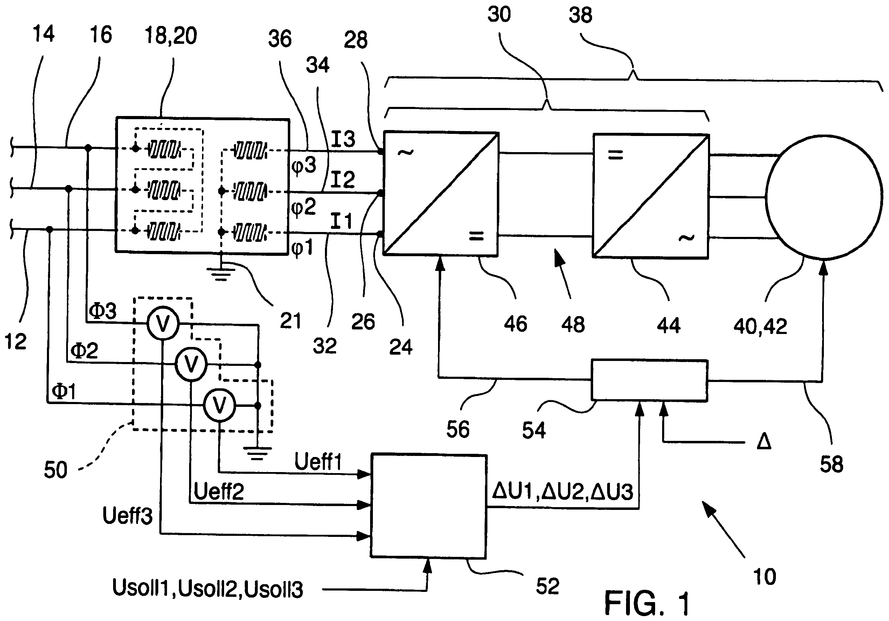

Die Fig. 1 zeigt ein System (Stromeinspeise-System) 10 zum Einspeisen von Strom in ein dreiphasiges Wechselspannungsnetz, von dem nur die Anschlussleitungen 12, 14, 16 gezeigt sind. Diese Anschlussleitungen 12, 14, 16 sind entsprechenden Netz-Phasen Φ1, Φ2, Φ3 des Wechselspannungsnetzes zugeordnet und an netzseitigen Anschlüssen eines Transformators

18 angeschlossen. Der Transformator ist als Dreieck-Stern-Transformator (Dy-Transformator) 20 mit herausgeführtem Nullpunkt 21 der einspeiseseitigen Sternschaltung ausgebildet. An den einspeiseseitigen Anschlüssen des Transformators 18 sind drei Ausgänge 24, 26, 28 eines Umrichtersystems 30 über drei Leitungen 32, 34, 36, die den Netz-Phasen entsprechende Einspeise-Phasen ϕ1, ϕ2, ϕ3 zugeordnet sind, elektrisch leitend verbunden. Das Umrichtersystem 30 ist Teil einer Energieerzeugungseinrichtung 38, die neben dem Umrichtersystem 30 auch eine als Generator 40 ausgebildete elektrische Maschine 42 aufweist. Das Umrichtersystem 30 umfasst einen generatorseitigen Umrichter 44, einen netzseitigen Umrichter 46 mit den Ausgängen 24, 26, 28 und einen zwischen den beiden Umrichtern 44, 46 zwischengeschalteten Gleichspannungszwischenkreis 48.

Das System weist weiterhin eine Vorrichtung 50 zur Ermittlung von drei den Netz-Phasen Φ1, Φ2, Φ3 zugeordneten Spannungskenngrößen Ueff1, Ueff2, Ueff3 auf, die diese Spannungskenngrößen Ueff1 Ueff2, Ueff3 einer Einrichtung 52 zuführen. Diese Einrichtung 52 ist eine Einrichtung zur Bestimmung der Abweichungen ΔU1, ΔU2, ΔU3 der ermittelten Spannungskenngrößen gegenüber entsprechenden Soll-Spannungkenngrößen Usoll1 = Usoll2 = Usoll3 = Usoll und zur Steuerung des Umrichtersystems 30 derart, dass eine Einspeisung von Blindstrom in Abhängigkeit der zuvor bestimmten Abweichungen ΔU1, ΔU2, ΔU3 erfolgt. Diese Steuerung ist eine Steuerung des netzseitigen Umrichters 46 mittels einer Steuer-/Regeleinrichtung 54 der Energieerzeugungseinrichtung 38 und ist in Fig. 1 durch den Pfeil 56 angedeutet. Zu dieser Steuerung erhält besagte Steuer-/Regeleinrichtung 54 drei die Abweichungen ΔU1, ΔU2, ΔU3 beschreibende Signale von der Einrichtung 52.

### Es ergibt sich folgende Funktion des Systems 10:

Die Vorrichtung 50 ermittelt alle drei Spannungskenngrößen Ueff1, Ueff2, Ueff3 der Netz-Phasen Φ1, Φ2, Φ3) des Wechselspannungsnetzes durch Messung der Spannungen gegen Erdpotential und gibt diese an die Einrichtung 52 aus. Die Einrichtung 52 bestimmt die Abweichungen ΔU1, ΔU2, ΔU3 der Spannungskenngrößen Ueff1, Ueff2, Ueff3 der drei Netz-Phasen Φ1, Φ2, Φ3 gegenüber den entsprechenden Soll-Spannungskenngrößen Usoll1, Usoll2, Usoll3. Erkennt die Steuer-/Regeleinrichtung 54, dass zumindest eine der Abweichungen ΔU1, ΔU2, ΔU3 eine über den Toleranzwert Δ hinausgehende Abweichung ist und dass die Abweichungen bezüglich der Symmetrie der Soll-Spannungskenngrößen asymmetrisch ausgebildet sind, so reduziert die Steuer-/Regeleinrichtung 54 einen Erregerstrom des Generators 40 (Pfeil 58) und steuert den netzseitigen Umrichter 46 des Umrichtersystems 30 derart an, dass die Einspeisung von Blindströmen 11, 12,13 eine bezüglich der jeweiligen Einspeisung an den Einspeise-Phasen ϕ1, ϕ2, ϕ3 asymmetrische Einspeisung der Blindströme 11, 12,13 zur Reduktion der Asymmetrie der Abweichungen ΔU1, ΔU2, ΔU3 der Spannungskenngrößen Ueff1, Ueff2, Ueff3, also der Netzfehler, ist.
Bei Abweichungen der Spannung(en) von symmetrischen Spannungswerten bis zu einem Schwellwert kann weiterhin Wirkleistung eingespeist werden und der Erregerstrom wird entsprechend der Abweichung verringert. Bei Abweichungen größer oder gleich dem Schwellwert erfolgt schließlich eine Reduzierung des Erregerstromes auf null.

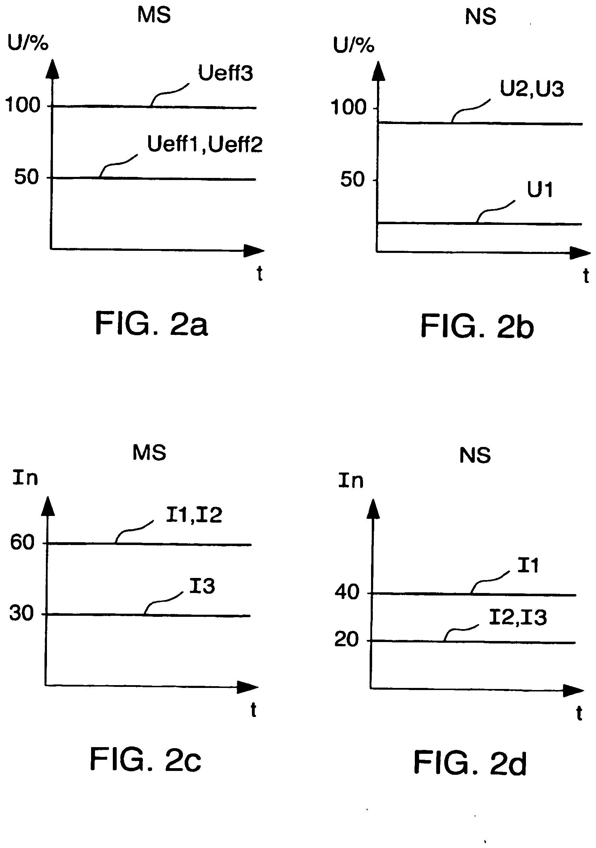

Die Figuren 2a bis 2d zeigen Graphen, bei denen netzseitige sowie erzeugerseitige Effektivspannungen Ueff und Effektivströme Ieff über der Zeit t aufgetragen sind. Diese Graphen illustrieren ein entsprechendes Beispiel der Funktion:
Tritt ein Netzfehler im Wechselspannungsnetz zwischen erster und zweiter Netz-Phase (Φ1, Φ2) auf, ergeben sich zum Beispiel die folgenden Effektivspannungen: Ueff1 = 50% Usoll, Ueff2 = 50% Usoll und Ueff3 = 100% Usoll (z. B. auf der Mittelspannungsseite). Somit sind die Abweichungen bezüglich der Symmetrie der Soll-Spannungskenngrößen Usoll asymmetrisch ausgebildet. Auf der Einspeiseseite (z. B. auf der Niederspannungsseite) ergeben sich U2 = 90 % Un, U3 = 90% Un und U1 = 20% Un. Nach Fehlererkennung wird der Erregerstrom im Extremfall auf null reduziert um den Generator 40 zu "entregen" und den Zwischenkreis 48 nicht mehr mit Energie zu versorgen.

Um die Spannungen des Wechselspannungsnetzes zu stabilisieren (also zur Netzunterstützung), speist der netzseitige Umrichter 46 in Einspeisephase Φ3 einen Blindstrom von bis zu 100% Imax ein, sodass in den Einspeise-Phasen Φ1, Φ2 jeweils der halbe Strom (je 50% Imax) gegenphasig zurückfließt. Der asymmetrisch eingespeiste Blindstrom erzeugt an der Netzimpedanz einen Spannungsabfall und wirk daher bezüglich der Netzspannung stützend. In dem Beispiel in Fig 2c und 2d wird 40 % In in Phase 1 Φ1) und je 20 % In in Phase 2 und 3 eingespeist (Φ2, Φ3).

Es ergibt sich die folgende Stromeinspeisung beim Wechselspannungsnetz z. B. Mittelspannungsseitig: 11 = 60% In, 12 = 60% In und 13 = 0% In und die folgende Stromeinspeisung einspeiseseitig z. B. Niederspannungsseitig: 11 = 40 % In, 12 = 20% In und 13 = 20% In.

Allgemein ergeben sich folgende alternative Lösungen:

### 1. Verwendung eines Nullsystems:

Wird auf der Netz- und Einspeiseseite ein Yy Transformator mit herausgeführten Nullpunkt (Sternpunkt) verwendet, so wird dieser Sternpunkt noch zweckmäßiger Weise geerdet um somit eine feste Bezugsgröße zu erhalten, kann ein quasi einphasiger Strom, der sich über das Nullsystem schließt, eingespeist werden. Die Regelung des Stromes, Amplitude und Phasenlage muss derart auf der Netzseite erfolgen, so dass sich auf der Netzseite eine möglichst optimal gestützte Spannung, möglichst symmetrisch, einstellt. Hierfür wird die Spannung mit der Vorrichtung auf der Netzseite gemessen und den Einrichtungen 52, 54 (Controller) zugeführt.

Üblicherweise wird bei dreiphasigen Systemen die Feldorientierte Regelung mit der Park und Clarke Transformation verwendet, die hier nicht eingesetzt werden kann, da sie sich auf dreiphasige Systeme bezieht.

Der Blindstrom wird von dem netzseitigen Umrichter 46 geliefert, die Elektrische Maschine 42, Synchronmaschine elektrisch erregt oder permanent erregt, oder die doppelt gespeiste Asynchronmaschine tragen nicht zur asymmetrischen Blindstromstützung bei.

In einer Alternative werden drei unabhängige einphasige Frequenzumrichter mit einem einphasigen Netzfilter und einer übergeordneten dreiphasigen Netzregelung realisiert. Es werden Wechselströme mit Netzfrequenz eingespeist. Das Nullsystem schließt sich über den Generator, der in Sternschaltung auszuführen ist und ggf. geerdet wird. Alternativ zu den drei einphasigen Wechselrichtern kann auch der dreiphasige Umrichter 46 eingesetzt werden.

### 2. Verwendung eines Yy Transformators ohne herausgeführten Nullpunkt:

Wird ein Transformator der Schaltgruppe Yy verwendet und der Sternpunkt nicht herausgeführt, schließen sich die drei Leiterströme im Stempunkt. Die Spannung wird auf der Netzseite mit der Vorrichtung 50 (Sensor) gemessen und den Controllern 52, 54 als Steuerungsgröße zugeleitet. Alternativ kann auch ein Modell des Transformators 18 in der Steuerung 54 abgelegt werden und mit den gemessenen Spannungen auf der Generatorseite gearbeitet werden. Die drei Phasenströme werden nun in ihrer Phasenlage und Amplitude derart geregelt eingespeist, so dass sich auf der Netzseite eine Netzstützung, möglichst symmetrische Netz mit Nennspannung ergibt.

### 3. Verwendung eines Dy Transformators (wie in Fig. 1):

Bei Einsatz eines Transformators der Schaltgruppe Dy ergibt sich mit einem herausgeführten Nullpunkt 21 des Transformators 18 und des verwendeten Generators 42 ein ähnliches Bild wie unter Punkt 1, wobei hier insbesondere die Phasen- und Amplitudenverschiebung des Dy Transformators 20 zu berücksichtigen sind. Alternativ wird die Mittelspannung im Netz gemessen oder die einspeiseseitig gemessene Niederspannung und mit dem Transformatormodel umgerechnet als Regelgröße verwendet.

4. Wird ein Dy Transformator mit nicht herausgeführtem Nullpunkt eingesetzt, gilt das gleiche wie unter Punkt 2.

## Patentansprüche

1. Verfahren zur Einspeisung von Strom in ein mehrphasiges Wechselspannungsnetz über einen Transformator (18), der zwischen dem Wechselspannungsnetz und einer der Anzahl der Netz-Phasen Φ1, Φ2, Φ3) des Netzes entsprechenden Zahl von Einspeise-Phasen (Φ1, Φ2, Φ3) elektrisch zwischengeschaltet ist, wobei mindestens eine Spannungskenngröße (Ueff1, Ueff2, Ueff3) einer der Netz-Phasen (Φ1, Φ2, Φ3) ermittelt wird und eine Einspeisung von Blindströmen in Abhängigkeit einer zuvor bestimmten Abweichung (ΔU1, ΔU2, ΔU3) der Spannungskenngröße (Ueff1, Ueff2, Ueff3) der mindestens einen Netz-Phase Φ1, Φ2, Φ3) gegenüber einer entsprechenden Soll-Spannungskenngröße (Usoll) erfolgt, wobei die Abweichung (ΔU1, ΔU2, ΔU3) jeder der Spannungskenngrößen (Ueff1, Ueff2, Ueff3) bestimmt wird und die Einspeisung der Blindströme bei Abweichungen, die bezüglich der Symmetrie der Soll-Spannungskenngrößen (Usoll) asymmetrisch ausgebildet sind, eine bezüglich der jeweiligen Einspeisung an den Einspeise-Phasen (ϕ1, ϕ2, ϕ3) asymmetrische Einspeisung der Blindströme ist,
**dadurch gekennzeichnet,**
**dass** die asymmetrische Einspeisung der Blindströme mittels einer einspeiseseitig an den Transformator (18) angeschlossenen Energieerzeugungseinrichtung (38) mit Generator (40) und nachgeschaltetem Umrichtersystem (30) und nur bei mindestens einer Abweichung (ΔU1, ΔU2, ΔU3) erfolgt, die einen Toleranzwert (Δ) überschreitet, wobei nach Erkennen einer über den Toleranzwert (Δ) hinausgehenden Abweichung (ΔU1, ΔU2, ΔU3) ein Erregerstrom des Generators (40) reduziert wird und mittels des Umrichtersystems (30) der asymmetrische Blindstrom eingespeist wird.

2. Verfahren nach Anspruch 1, **dadurch gekennzeichnet, dass** die Ermittlung der Spannungskenngrößen (Ueff1, Ueff2, Ueff3) ein Messen der an den Netz-Phasen (Φ1, Φ2, Φ3) anliegenden Spannungen und ein Bestimmen der Spannungskenngrößen (Ueff1, Ueff2, Ueff3) aus der jeweiligen Spannung ist.

3. Verfahren nach Anspruch 1, **dadurch gekennzeichnet, dass** sich die Ermittlung der Spannungskenngröße (Ueff1, Ueff2, Ueff3) aus einem Messen von entsprechenden Spannungswerten an den Einspeise-Phasen (ϕ1, ϕ2, ϕ3) und einer Bestimmung der zugeordneten Spannungskenngrößen (Ueff1, Ueff2, Ueff3) aus den Spannungswerten mittels eines Modells des Transformators zusammensetzt.

4. Verfahren nach einem der vorhergehenden Ansprüche, **dadurch gekennzeichnet, dass** sich die Soll-Spannungskenngröße zu einem beliebigen Zeitpunkt aus den bisher ermittelten Spannungskenngrößen (Ueff1, Ueff2, Ueff3) ergibt.

5. System (10) zum Einspeisen von Strom in ein mehrphasiges Wechselspannungsnetz, mit einer Energieerzeugungseinrichtung (38), die einen Generator (40) und ein dem Generator (40) nach geschaltetes Umrichtersystem (30) aufweist, mit einem Transformator (18), der zwischen dem Wechselspannungsnetz und einer der Anzahl der Netz-Phasen (Φ1, Φ2, Φ3) entsprechenden Zahl von Ausgängen (24, 26, 28) des Umrichtersystems (30) zwischengeschaltet ist, wobei das Umrichtersystem (30) einen generatorseitigen Umrichter (44), einen Gleichspannungszwischenkreis (48) und einen die Ausgänge (24, 26, 28) aufweisenden netzseitigen Umrichter (46) aufweist, **gekennzeichnet durch**
- eine Vorrichtung (50) zur Ermittlung mindestens einer Spannungskenngröße (Ueff1, Ueff2, Ueff3) einer der Netz-Phasen (Φ1, Φ2, Φ3),
- eine Einrichtung (52) zur Bestimmung einer Abweichung (ΔU1, ΔU2, ΔU3) mindestens einer ermittelten Spannungskenngrößen (Ueff1, Ueff2, Ueff3) gegenüber einer entsprechenden Soll-Spannungkenngröße (Usoll) wobei die Einrichtung (52) zur Bestimmung der Abweichung (ΔU1, ΔU2, ΔU3) jeder der Spannungskenngrößen (Ueff1, Ueff2, Ueff3) geeignet ist und
eine Steuer-/Regeleinrichtung (54) zur Steuerung des Umrichtersystems (30) derart, dass eine Einspeisung von Blindstrom in Abhängigkeit der zuvor bestimmten Abweichung (ΔU1, ΔU2, ΔU3) erfolgt, wobei die Steuer-/Regeleinrichtung (54) den Erregerstrom des Generators (40) reduziert und das Umrichtersystem (30) derart ansteuert, dass dieses bei Abweichungen (ΔU1, ΔU2, ΔU3), die bezüglich der Symmetrie der Soll-Spannungskenngrößen (Usoll) asymmetrisch ausgebildet sind, einen bezüglich der Ausgänge asymmetrischen Blindstrom einspeist, und wobei die Steuerung des netzseitigen Umrichters (46) mittels der Steuer-/Regeleinrichtung (54) in Abhängigkeit eines von dieser Steuer-/Regeleinrichtung (54) erkannten Hinausgehens zumindest einer der Abweichungen (ΔU1, ΔU2, ΔU3) über einen Toleranzwert (Δ) erfolgt.

6. System nach Anspruch 5, **gekennzeichnet durch** eine Vorrichtung (50) zur Messung der an den Netz-Phasen (Φ1, Φ2, Φ3) anliegenden Spannungen und zum Bestimmen der Spannungskenngrößen (Ueff1, Ueff2, Ueff3) aus der jeweiligen Spannung.

7. System nach Anspruch 5, **gekennzeichnet durch** eine Vorrichtung zur Messung der an den Ausgängen (24, 26, 28) anliegenden Spannungswerten und ein Modell des Transformators (18) zur Bestimmung der zugehörigen Spannungskenngrößen (Ueff1, Ueff2, Ueff3) aus den Spannungswerten.

## Claims

1. Method for feeding current into a multi-phase AC-network via a transformer (18), which is electrically connected between the AC-network and a number of feed-in phases (ϕ1, ϕ2, ϕ3) corresponding to the number of mains phases (Φ1, Φ2, Φ3) of the network, wherein at least one voltage characteristic (Ueff1, Ueff2, Ueff3) of one of the mains phases (Φ1, Φ2, Φ3) is determined and reactive currents are fed in depending on a predetermined deviation (ΔU1, ΔU2, ΔU3) of the voltage characteristic (Ueff1, Ueff2, Ueff3) of the at least one mains phase (Φ1, Φ2, Φ3) with respect to a corresponding target voltage characteristic (Usoll), and wherein the deviation (ΔU1, ΔU2, ΔU3) of each of the voltage characteristics (Ueff1, Ueff2, Ueff3) is determined and the feed-in of the reactive currents in the case of deviations, which are formed asymmetrically with respect to the symmetry of the target voltage characteristics (Usoll) is an asymmetric feed-in of the reactive currents with respect to the respective feed-in at the feed-in phases (ϕ1, ϕ2, ϕ3),
**characterized in that**,
the asymmetrical feed-in of the reactive currents is conducted by means of an energy generating means (38) connected to the transformer (18) at the feed-in end and comprising a generator (40) and a downstream converter system (30), and is implemented only if at least one deviation (ΔU1, ΔU2, ΔU3) is present which exceeds a tolerance value (Δ), wherein after detecting a deviation (ΔU1, ΔU2, ΔU3) exceeding the tolerance value (Δ) an excitation current of the generator (40) is reduced and the asymmetric reactive current is fed-in by means of the converter system (30).

2. Method according to claim 1, **characterized in that** the determination of the voltage characteristics (Ueff1, Ueff2, Ueff3) is implemented by measuring the voltages applied at the mains phases (Φ1, Φ2, Φ3) and determining the voltage characteristics (Ueff1, Ueff2, Ueff3 ) from the respective voltage.

3. Method according to claim 1, **characterized in that** the determination of the voltage characteristic (Ueff1, Ueff2, Ueff3) is composed of measuring respective voltage values at the feed-in phases (ϕ1, ϕ2, ϕ3) and determining the associated voltage characteristics (Ueff1, Ueff2, Ueff3) from the voltage values by means of a model of the transformer.

4. Method according to any one of the preceding claims, **characterized in that** the target voltage characteristic is obtained at an arbitrary time from the previously determined voltage characteristics (Ueff1, Ueff2, Ueff3).

5. System (10) for feeding current into a multi-phase AC-network comprising an energy generating means (38) which comprises a generator (40) and a converter system (30) provided downstream of the generator (40) and is connected to a transformer (18) which is connected between the AC-network and a number of outputs (24, 26, 28) of the converter system (30) corresponding to the number of mains phases (Φ1, Φ2, Φ3), wherein the converter system (30) comprises a generator-side converter (44), a DC-intermediate circuit (48) and a network-side converter (46) comprising the outputs (24, 26, 28);
**characterized by**
- a device (50) for determining at least one voltage characteristic (Ueff1, Ueff2, Ueff3) of one of the mains phases (Φ1, Φ2, Φ3);
- means (52) for determining a deviation (ΔU1, ΔU2, ΔU3) of at least one determined voltage characteristic (Ueff1, Ueff2, Ueff3) with respect to a corresponding target voltage characteristic (Usoll), wherein the means (52) is adapted to determine the deviation (ΔU1, ΔU2, ΔU3) of each of the voltage characteristics (Ueff1, Ueff2, Ueff3); and
a control/regulating means (54) for controlling the converter system (30) such that a feed-in of a reactive current is implemented depending on the previously detected deviation (ΔU1, ΔU2, ΔU3), wherein the control/regulating means (54) reduces the excitation current of the generator (40) and drives the converter system (30) such that for deviations (ΔU1, ΔU2, ΔU3) which are formed asymmetrically with respect to the symmetry of the target voltage characteristics (Usoll) it feeds in a reactive current which is asymmetrical with respect to the outputs, and wherein the control of the network-side converter (46) by means of the control/regulating means (54) is implemented based on the event that at least one of these deviations (ΔU1, ΔU2, ΔU3) exceeds a tolerance value (Δ) which is detected by said control/regulating means (54).

6. System according to claim 5, **characterized by** a device (50) for measuring the voltages applied to the mains phases (Φ1, Φ2, Φ3) and for determining the voltage characteristics (Ueff1, Ueff2, Ueff3) from the respective voltage.

7. System according to claim 5, **characterized by** a device for measuring the voltage values applied at the outputs (24, 26, 28) and a model of the transformer (18) for determining the associated voltage characteristics (Ueff1, Ueff2, Ueff3) from the voltage values.

## Revendications

1. Procédé destiné à alimenter du courant dans un réseau polyphasé de tension alternative par l'intermédiaire d'un transformateur (18), qui est électriquement interconnecté entre le réseau de tension alternative et un nombre de phases d'alimentation (ϕ1, ϕ2, ϕ3) qui correspond au nombre de phases réseau (Φ1, Φ2, Φ3) du réseau, au moins une caractéristique de tension (Ueff1, Ueff2, Ueff3) de l'une des phases réseau (Φ1, Φ2, Φ3) étant déterminée et au moins une alimentation de courants déwattés étant effectuée en fonction d'un écart (ΔU1, ΔU2, ΔU3) précédemment déterminé des caractéristiques de tension (Ueff1, Ueff2, Ueff3) de l'au moins une phase réseau (Φ1, Φ2, Φ3) par rapport à une caractéristique de tension de consigne (Usoll), l'écart (ΔU1, ΔU2, ΔU3) étant déterminé pour chacune des caractéristiques de tension (Ueff1, Ueff2, Ueff3) et lors d'écarts, qui au niveau de la symétrie des caractéristiques de tension de consigne (Usoll) sont conçus en étant asymétriques, l'alimentation des courants déwattés étant une alimentation asymétrique des courants déwattés au niveau de l'alimentation respective sur les phases d'alimentation (ϕ1, ϕ2, ϕ3),
**caractérisé en ce que**
l'alimentation asymétrique des courants déwattés s'effectue au moyen d'un dispositif générateur d'énergie (38) connecté côté alimentation sur le transformateur (18), avec générateur (40) et système de variateurs (30) monté en aval et uniquement en présence d'au moins un écart (ΔU1, ΔU2, ΔU3) qui dépasse une valeur de tolérance (Δ), après identification d'un écart (ΔU1, ΔU2, ΔU3) dépassant la valeur de tolérance (Δ), un courant d'excitation (40) du générateur étant réduit et le courant asymétrique déwatté étant alimenté au moyen du système de variateurs (30).

2. Procédé selon la revendication 1, **caractérisé en ce que** la détermination des caractéristiques de tension (Ueff1, Ueff2, Ueff3) est une mesure des tensions appliquées aux phases réseau (Φ1, Φ2, Φ3) et une déterminé des caractéristiques de tension (Ueff1, Ueff2, Ueff3) à partir de la tension respective.

3. Procédé selon la revendication 1, **caractérisé en ce que** la détermination des caractéristiques de tension (Ueff1, Ueff2, Ueff3) se compose d'une mesure de valeurs de tension correspondantes sur les phases d'alimentation (ϕ1, ϕ2, ϕ3) et d'une détermination des caractéristiques de tension (Ueff1, Ueff2, Ueff3) associées, à partir des valeurs de tension au moyen d'un modèle du transformateur.

4. Procédé selon l'une quelconque des revendications précédentes, **caractérisé en ce que** la caractéristique de tension de consigne à un moment quelconque résulte des caractéristiques de tension (Ueff1, Ueff2, Ueff3) déterminées jusqu'à présent.

5. Système (10) destiné à alimenter du courant dans un réseau polyphasé de tension alternative, avec un dispositif générateur d'énergie (38) qui comporte un générateur (40) et un système de variateurs (30) monté en aval du générateur (40), avec un transformateur (18) qui est interconnecté entre le réseau de tension alternative et un nombre de sorties (24, 26, 28) du système de variateurs (30) correspondant au nombre des phases réseau (Φ1, Φ2, Φ3), le système de variateurs (30) comportant un variateur (44) placé du côté du générateur, un circuit intermédiaire de tension continue (48) et un variateur (46) du côté du réseau, comportant les sorties (24, 26, 28), **caractérisé par**
- un dispositif (50) destiné à déterminer une caractéristique de tension (Ueff1, Ueff2, Ueff3) de l'une des phases réseau (Φ1, Φ2, Φ3),
- un système (52) destiné à déterminer un écart (ΔU1, ΔU2, ΔU3) entre au moins l'une des caractéristiques de tension (Ueff1, Ueff2, Ueff3) déterminées et une caractéristique de tension de consigne (Usoll), le système (52) étant adapté pour déterminer l'écart (ΔU1, ΔU2, ΔU3) pour chacune des caractéristiques de tension (Ueff1, Ueff2, Ueff3) et
- un système de commande/réglage (54) destiné à commander le système de variateurs (30) de telle sorte qu'il s'effectue une alimentation de courant déwatté en fonction de l'écart (ΔU1, ΔU2, ΔU3) précédemment déterminé, le système de commande/réglage (54) réduisant le courant d'excitation du générateur (40) et excitant le système de variateurs (30) de telle sorte que dans le cas d'écarts, (ΔU1, ΔU2, ΔU3), qui au niveau de la symétrie des caractéristiques de tension de consigne (Usoll) sont conçus de manière asymétrique, celui-ci alimente un courant déwatté asymétrique par rapport aux sorties et la commande du variateur (46) placé du côté du réseau s'effectuant au moyen du système de commande/réglage (54) en fonction d'un dépassement d'une valeur de tolérance (Δ) identifié par ledit système de commande/réglage (54) pour l'au moins un des écarts (ΔU1, ΔU2, ΔU3).

6. Système selon la revendication 5, **caractérisé par** un dispositif (50) destiné à mesurer les tensions appliquées sur les phases réseau (Φ1, Φ2, Φ3) et à déterminer les caractéristiques de tension (Ueff1, Ueff2, Ueff3) à partir de la tension respective.

7. Système selon la revendication 5, **caractérisé par** un dispositif destiné à mesurer les valeurs de tension appliquées aux sorties (24, 26, 28) et un modèle du transformateur (18) destiné à déterminer les caractéristiques de tension (Ueff1, Ueff2, Ueff3) à partir des valeurs de tension.
